# EUROPÄISCHE PATENTANMELDUNG

(11) **EP 4 549 447 A1**
(43) Veröffentlichungstag der Anmeldung: **07.05.2025**
(21) Anmeldenummer: 23207830.3
(22) Anmeldetag: 06.11.2023
(51) Int. Cl.: C07F 9/40, C08K 5/5333, C09K 21/12

(54) **VERFAHREN ZUR HERSTELLUNG VON DIETHYLHYDROXYMETHYLPHOSPHONAT**

(71) Anmelder: LANXESS Deutschland GmbH, 50569 Köln (DE)
(72) Erfinder: HANSEL, Jan-Gerd, 51469 Bergisch Gladbach (DE)

(57) **Zusammenfassung**

Die vorliegende Erfindung betrifft ein Verfahren zur Herstellung von Diethylhydroxymethylphosphonat mit hoher Reinheit durch Umsetzung von Diethylphosphit mit Paraformaldehyd, in Gegenwart von 1 bis 3 mol-% Natriumcarbonat in einer Menge, die dadurch erhältlichen Zusammensetzungen und deren Verwendungen.

## Beschreibung

Diethylhydroxymethylphosphonat (DEHMP, CAS-Nr. 3084-40-0) ist eine organische Phosphorverbindung, die in vielfältigen industriellen Anwendungen eingesetzt wird. So wird DEHMP für die Herstellung des Synthesebausteins Diethyl-p-tosyloxymethylphosphonat (DETMP, CAS-Nr. 31618-90-3, siehe z. B. US 5,514,798) benötigt. Dieser wiederum ermöglicht die Synthese verschiedener Pharmazeutika, wie beispielsweise die antiviralen Wirkstoffe Cidofovir, Tenofovir und Adefovir sowie ihrer jeweiligen Derivate und Prodrugs. Ähnliche DEHMP-Derivate wurden als Herbizide vorgeschlagen (siehe z. B. EP 0 511 826 A2). Weiterhin kann DEHMP zur Herstellung flammwidriger Materialien, wie zum Beispiel Polyurethane (US 3,385,801), Baumwollfasern (US 3,726,639) oder Phenolharze (DE 24 43 074 A1) dienen. DEHMP wurde auch als Komponente einer aschefreien Schmierölzubereitung vorgeschlagen (WO 2016170707 A1).

Zur Synthese von DEHMP wird im Stand der Technik die Umsetzung von Diethylphosphit (DEPI, CAS-Nr. 762-04-9) mit Paraformaldehyd bevorzugt. Wenn diese Reaktion ohne zusätzlichen Katalysator durchgeführt wird, sind lange Reaktionszeiten von mehreren Tagen (siehe US 2,494,862) erforderlich. Technisch sinnvoll umsetzbare Synthesen werden daher ausschließlich in Gegenwart einer Base durchgeführt. Zur Durchführung dieser Synthese wird industriell die Verwendung von Trialkylaminen als Base in Substanz (siehe z. B. EP 0 511 826 A2) oder in einem organischen Lösungsmittel, wie zum Beispiel Toluol (siehe z. B. US 5,514,798), bevorzugt. Nachteilig an dieser Methode sind die hohen Kosten für das Trialkylamin und der daraus resultierende Aufwand für seine Abtrennung und sein Recycling. Weiterhin sind viele Trialkylamine giftig, beispielsweise ist Triethylamin giftig bei Hautkontakt oder Einatmen. Die Verwendung solcher Stoffe verursacht unerwünschten Mehraufwand für Arbeitsschutzmaßnahmen und kann wegen möglicher Kontamination des Reaktionsproduktes unerwünscht sein.

Als Alternative zu Trialkylaminen wurden anorganische Basen vorgeschlagen. CN 103073747 A offenbart ebenfalls die Synthese von DEHMP aus DEPI und Paraformaldehyd in Gegenwart eines Katalysators. Als Katalysator werden verschiedene anorganische Säuren, Neutralsalze und Basen sowie diverse organische Aminbasen beansprucht. Die erforderliche Menge an Katalysator wird mit 1 - 20 mol % bezogen auf die eingesetzte Menge DEPI angegeben. Im einzigen Beispiel mit einer anorganischen Base wurden 5 mol % Kaliumcarbonat bezogen auf die verwendete Menge DEPI eingesetzt. Die Reinigung des Produkts erfolgte dabei durch Extraktion mit Choloform.

Gemäß CN 105541910 A wird DEHMP aus DEPI und Paraformaldehyd in einem Lösungsmittel hergestellt, indem man als Base Kaliumcarbonat, Natriumcarbonat oder Triethylamin verwendet, wobei Kaliumcarbonat bevorzugt ist und zu höheren Ausbeuten führt. Die erforderliche Menge an Base wird nicht angegeben, in den Beispielen werden 3,3 Mol-% Kaliumcarbonat bzw. 4,3 mol-% Natriumcarbonat eingesetzt, wobei mit Kaliumcarbonat über insgesamt zwei Reaktionsschritte höhere Ausbeuten erzielt wurden.

CN 106699814 A offenbart die DEHMP-Synthese aus DEPI und Paraformaldehyd in Toluol als Lösungsmittel in Gegenwart eines großen Überschusses von 318 mol-% Kaliumcarbonat als Base.

Aus EP 3 719 047 A1 ist bekannt, DEHMP aus DEPI und Paraformaldehyd in einem Lösungsmittel in Gegenwart von 5 mol-% Kaliumcarbonat herzustellen.

In keinem der zitierten Dokumente zur DEHMP-Synthese mit anorganischen Basen wie Kaliumcarbonat finden sich Angaben zu Umsatz und Selektivität.

Die Verwendung von basischen Katalysatoren in der DEHMP-Herstellung bringt immer den Nachteil mit sich, dass das unmittelbare Reaktionsprodukt einen erheblichen Rest an Base oder deren salzartigen Folgeprodukte enthält. Wenn diese Reste die nachfolgende Verwendung des DEHMP stören, müssen sie in einem Reinigungsschritt abgetrennt werden.

Die Reinigung von DEHMP ist nach dem Stand der Technik jedoch mit erheblichen Herausforderungen verbunden. Die Flüchtigkeit von DEHMP ist so gering, dass für eine Destillation über Kopf hohe Temperaturen und extrem niedrige Drücke erforderlich sind (siehe z. B. Org. Synth., Coll. Vol. 7, p. 160, 1990). Dies stellt bei der Produktion im technischen Maßstab sehr hohe Ansprüche an die einzusetzenden Apparate. Die Reinigung von DEHMP durch Extraktion in einem organisch-wässrigen Lösungsmittelsystem wird durch die hohe Polarität von DEHMP erschwert. DEHMP ist in jedem Verhältnis mit Wasser mischbar und ausgesprochen hydrophil. Ein Maß für die Hydrophilie einer Substanz ist ihr Octanol-Wasser-Verteilungskoeffizient P, der die Verteilung des Stoffes in einem n-Octanol-Wasser-System beschreibt. Laut SciFinder wird der Octanol-Wasser-Verteilungskoeffizienten von DEHMP mit 0,13 abgeschätzt (logP = -0,90 ± 0,36, modelliert mit ACD/Labs Software V11.02). Da DEHMP sich demzufolge bei einer Verteilung eher in der wässrigen als in der organischen Phase wiederfindet, ist eine Extraktion im organisch-wässrigen Lösungsmittelsystem zur Abtrennung von wasserlöslichen Salzen ausgesprochen ineffizient. Darüber hinaus werden dafür nach dem Stand der Technik problematische Lösungsmittel eingesetzt, wie das giftige und vermutlich krebserregende Chloroform (siehe CN 103073747 A).

Die Aufgabe der vorliegenden Erfindung bestand daher darin, ein Verfahren zur Herstellung von DEHMP bereit zu stellen, welches die obigen Nachteile des Stands der Technik ganz oder teilweise vermeidet. Bevorzugt sollte das Verfahren einen kostengünstigen, toxikologisch unbedenklichen Katalysator verwenden und schon vor einer Reinigung eine höhere Produktreinheit als die Verfahren aus dem Stand der Technik erreichen.

Überraschenderweise wurde gefunden, dass sich DEHMP in hoher Reinheit herstellen lässt, wenn die Umsetzung von DEPI mit Paraformaldehyd in Gegenwart Natriumcarbonat in Kombination mit einer spezifischen Menge dieses Katalysators von 1 bis 3 mol-%, vorzugsweise von 2 bis 3 mol-% (jeweils bezogen auf die eingesetzte Menge DEPI) durchgeführt wird. Vergleichsversuche zeigen, dass DEHMP dabei auch ohne aufwändige Reinigungsoperationen in deutlich höherer Reinheit erhalten wird.

Gegenstand der Erfindung ist ein Verfahren zur Herstellung von DEHMP durch Umsetzung von DEPI mit Paraformaldehyd, dadurch gekennzeichnet, dass die Umsetzung in Gegenwart von Natriumcarbonat in einer Menge von 1 bis 3 mol-%, vorzugsweise von 2 bis 3 mol-% (jeweils bezogen auf die eingesetzte Menge DEPI) durchgeführt wird.

Die Umsetzung kann in einem organischen Lösungsmittel durchgeführt werden. Als organische Lösungsmittel sind solche Lösungsmittel geeignet, in denen sich die Rohstoffe zumindest teilweise löslich sind. Unter teilweise löslich versteht der Fachmann hierbei eine Löslichkeit von mindestens 10g, vorzugsweise von mindestens 100g und besonders bevorzugt von mindestens 250g pro Liter Lösungsmittel bei einer Temperatur von 40°C. Das Lösungsmittel enthält typischerweise weniger als 5 Gew.-% Wasser, bevorzugt weniger als 1 Gew.-% Wasser und besonders bevorzugt weniger als 0,2 Gew.-% Wasser.

Beispiele für geeignete Lösungsmittel sind Alkohole (wie z. B. Methanol, Ethanol, n-Propanol, Isopropanol, n-Butanol, sec-Butanol, Isobutanol, tert.-Butanol oder DEHMP), Kohlenwasserstoffe (wie z. B. Toluol, Xylol, Cyclohexan oder n-Heptan), Halogenkohlenwasserstoffe (wie z. B. Dichlormethan oder n-Butylchlorid), Ether (wie z. B. Diethylether, oder Methyl-tert.-butylether) und Ester (wie z. B. Ethylacetat, n-Butylacetat, Triethylphosphat), sowie Mischungen dieser Stoffe.

Bevorzugt wird Ethanol als Lösungsmittel eingesetzt.

Das Natriumcarbonat ist entweder wasserfrei oder kristallwasserhaltig. Bevorzugt wird wasserfreies Natriumcarbonat (CAS Nr. 497-19-8) verwendet.

Die Menge des in das Verfahren einzusetzenden Natriumcarbonats beträgt von 1 bis 3 mol-% bezogen auf die eingesetzte Menge DEPI. Bevorzugt werden von 2 bis 3 mol-% und besonders bevorzugt 2,4 bis 3, 0 mol-% Natriumcarbonat eingesetzt.

Das erfindungsgemäße Verfahren wird durchgeführt, indem man die genannten Rohstoffe und das Lösungsmittel in einem geeigneten Reaktor unter Durchmischung bei einer Temperatur von 5 bis 75°C in Kontakt miteinander und damit zur Reaktion bringt. Bevorzugt wird das Verfahren bei 15 bis 65°C durchgeführt, besonders bevorzugt wird es bei 25 bis 55°C durchgeführt. Es zeigte sich, dass die im Vergleich zum Stand der Technik geringere Reaktionstemperatur beim vorliegenden Verfahren erstaunlicherweise zu Vorteilen beim Umsatz führt. Die erforderliche Verweilzeit bei der gewählten Reaktionstemperatur kann leicht anhand der abklingenden Reaktionswärme bestimmt werden. Alternativ kann der Umsatz der Rohstoffe in der Reaktionsmischung mittels analytischer Methoden ermittelt werden. Geeignete analytische Methoden sind beispielsweise die Gaschromatographie, die Hochleistungs-Flüssigchromatographie oder die NMR-Spektroskopie.

Die Rohstoffe können gemeinsam im Reaktor vorgelegt oder in beliebiger Reihenfolge nacheinander in den Reaktor dosiert werden. In einer bevorzugten Variante des Verfahrens werden Paraformaldehyd und das ggf. verwendete Lösungsmittel vorgelegt und anschließend Diethylphosphit zudosiert. Das Natriumcarbonat kann dabei zusammen mit dem Paraformaldehyd und dem ggf. verwendeten Lösungsmittel vorgelegt werden, oder nachträglich allein oder zusammen mit dem Diethylphosphit zudosiert werden. Bevorzugt wird das Natriumcarbonat vorgelegt.

Bevorzugt wird die Reaktion durchgeführt, bis 90% oder mehr des eingesetzten Diethylphosphits in Diethylhydroxymethylphosphonat umgewandelt wurden. Die Bestimmung des Umsatzes kann dabei mittels ³¹P-NMR-Spektroskopie erfolgen.

Bevorzugt wird die Reaktion durchgeführt, bis der Restgehalt an Diethylphosphit in der Reaktionsmischung - bestimmt mittels ³¹P-NMR-Spektroskopie - weniger als 2%, vorzugsweise weniger als 1% beträgt.

Das Verfahren kann ansatzweise oder kontinuierlich durchgeführt werden. In der ansatzweisen Durchführung wird beispielsweise ein üblicher Rührkessel verwendet. Für eine kontinuierliche Durchführung bietet sich zum Beispiel eine Rührkesselkaskade an.

Das erfindungsgemäße Verfahren kann nach der Synthese noch weitere, aus dem Stand der Technik bekannte Aufarbeitungsschritte und Reinigungsoperationen umfassen. Beispiele dafür sind Filtration, Membrantechnik, Ionenaustausch, Extraktion, Adsorption oder Destillation gegebenenfalls unter vermindertem Druck. Bevorzugt umfasst die Reinigung nach der Umsetzung keine Extraktion, insbesondere keine Reinigung durch Zugabe von Wasser und Extraktion des Diethylhydroxymethylphosphonats mit einem organischen Lösungsmittel aus der wässrigen Phase.

Weiter bevorzugt erfolgt im Anschluss an die Umsetzung eine zumindest teilweise Abtrennung des Lösungsmittels durch Destillation. In einer weiteren bevorzugten Ausführungsform des Verfahrens werden nach der Synthese die in der Reaktionsmischung enthaltenen leichtflüchtigen Stoffe, insbesondere überschüssige Rohstoffe und/oder das optional verwendete Lösungsmittel, durch geeignete Trennoperationen bis auf einen Restgehalt von 1 Gew.-% oder weniger, besonders bevorzugt von 0,5 Gew.-% oder weniger abgetrennt. Besonders bevorzugt erfolgt eine kombinierte Aufarbeitung umfassend Filtration und Abtrennung der leichtflüchtigen Stoffe durch Destillation bzw. Strippung.

Das erfindungsgemäße Verfahren ermöglicht es, auf einfache Weise und mit minimalem Rohstoffeinsatz zu Zusammensetzungen zu gelangen, deren phosphorhaltigen Bestandteile zu mindestens 90 mol-% aus Diethylhydroxymethylphosphonat bestehen.

Durch das erfindungsgemäße Verfahren sind auch ohne aufwändige Reinigung nach der Umsetzung Zusammensetzungen erhältlich, bei denen die phosphorhaltigen Bestandteile der Zusammensetzung zu mindestens 90 mol-% aus Diethylhydroxymethylphosphonat und zu weniger als 2%, vorzugsweise weniger als 1% aus Diethylphosphit bestehen.

Erstaunlicherweise wurde festgestellt, dass solche Zusammensetzungen vorteilhaft einsetzbar sind für Anwendungen, bei denen die bei den Synthesen gemäß des Stands der Technik in der Reaktionsmischung anfallenden Verunreinigungen wie Nebenprodukte, Startmaterialien und Katalysatoren einen direkten Einsatz in Anwendungen verhindern und somit aufwändige Reinigungsschritte erfordern, wie zum Beispiel bei der Anwendung als Flammschutzadditiv in Kunststoffen, welches bereits vor oder während der Polymerisation zugegeben wird.

Somit sind auch die obigen Zusammensetzungen Gegenstand der Erfindung.

Anhand der nachfolgenden Beispiele wird die Erfindung näher erläutert, ohne dass dadurch eine Einschränkung der Erfindung bewirkt werden soll.

### Beispiele

Die Zusammensetzung der phosphorhaltigen Bestandteile in den Reaktionsmischungen wurde mittels ³¹P-NMR-Spektroskopie ermittelt. Die NMR-Messungen wurden an einem Spektrometer der Marke Spinsolve^{™} 80 Phosphorus des Herstellers Magritek bei einer Messfrequenz von 32,4 MHz durchgeführt. Die Proben der Reaktionsmischungen wurden unverdünnt gemessen. Die Signale von DEHMP und DEPI wurden anhand der Spektren authentischer Reinproben zugeordnet. Neben den Signalen der beiden genannten Bestandteile wurden in den Reaktionsmischungen stets auch weitere Signale beobachtet, die jedoch keinen Verbindungen sicher zugeordnet werden konnten. Zur Quantifizierung wurden protonenentkoppelte Spektren herangezogen. Unter der Annahme, dass der Reaktionsmischung während der Reaktionsdauer keine phosphorhaltigen Bestandteile verloren gehen, entspricht die Summe der Integrale aller Signale 100 mol-% des im eingesetzten DEPI enthaltenen Phosphors. Aus dem Anteil an DEHMP leitet sich also direkt die Ausbeute bezogen auf DEPI und aus dem Anteil an DEPI der Umsatz ab.

Das Ethanol enthielt weniger als 0,1 Gew.-% Wasser. Das Toluol wurde über Molekularsieb getrocknet. Alle eingesetzten Basen wurden von der Firma VWR International GmbH als wasserfreie Produkte bezogen und vor den Versuchen für 16 h bei 120°C im Trockenschrank getrocknet. Das verwendete DEPI war ein Handelsprodukt der Lanxess Deutschland GmbH. Paraformaldehyd wurde von der Firma Fisher Scientific GmbH bezogen.

### Vergleichsbeispiel 1 (nicht erfindungsgemäß)

In einem 250 ml-Dreihalskolben mit Heizmantel, Thermometer, mechanischem Rührer und Rückflusskühler wurden 80 ml Ethanol, 4,00 g (0,029 mol, 5,0 mol-% bzgl. DEPI) Kaliumcarbonat, 17,4 g Paraformaldehyd und 80,0 g (0,58 mol) DEPI bei 35°C miteinander vermischt. Die erhaltene Reaktionsmischung wurde 2 h bei 35°C und 4 h bei 60°C gerührt. Nach dem Abkühlen und Filtrieren wurde eine Probe der Reaktionsmischung gezogen und ihre Zusammensetzung mittels ³¹P-NMR bestimmt: 81,8 mol-% DEHMP, 4,6 mol-% DEPI, 13,6 mol-% unbekannte Nebenprodukte.

### Vergleichsbeispiel 2 (nicht erfindungsgemäß)

In einem 250 ml-Dreihalskolben mit Heizmantel, Thermometer, mechanischem Rührer und Rückflusskühler wurden 63 ml Ethanol, 2,00 g (0,014 mol, 2,5 mol-% bzgl. DEPI) Kaliumcarbonat, 19,0 g Paraformaldehyd und 80,0 g (0,58 mol) DEPI bei 35°C miteinander vermischt. Die erhaltene Reaktionsmischung wurde 2 h bei 35°C und 4 h bei 60°C gerührt. Nach dem Abkühlen und Filtrieren wurde eine Probe der Reaktionsmischung gezogen und ihre Zusammensetzung mittels ³¹P-NMR bestimmt: 78,8 mol-% DEHMP, 13,1 mol-% DEPI, 8,1 mol-% unbekannte Nebenprodukte.

### Vergleichsbeispiel 3 (nicht erfindungsgemäß)

Wie in Vergleichsbeispiel 2 wurde eine Reaktionsmischung hergestellt, jedoch wurden anstelle des Kaliumcarbonats 1,07 g Lithiumcarbonat eingesetzt. Zusammensetzung laut ³¹P-NMR: 4,3 mol-% DEHMP, 94,8 mol-% DEPI, 0,9 mol-% unbekannte Nebenprodukte.

### Vergleichsbeispiel 4 (nicht erfindungsgemäß)

Wie in Vergleichsbeispiel 2 wurde eine Reaktionsmischung hergestellt, jedoch wurden anstelle des Kaliumcarbonats 0,82 g Calciumoxid eingesetzt. Zusammensetzung laut ³¹P-NMR: 49,8 mol-% DEHMP, 43,6 mol-% DEPI, 6,6 mol-% unbekannte Nebenprodukte.

### Vergleichsbeispiel 5 (nicht erfindungsgemäß)

Wie in Vergleichsbeispiel 2 wurde eine Reaktionsmischung hergestellt, jedoch wurden anstelle des Kaliumcarbonats 1,08 g Calciumhydroxid eingesetzt. Zusammensetzung laut ³¹P-NMR: 56,5 mol-% DEHMP, 34,1 mol-% DEPI, 9,4 mol-% unbekannte Nebenprodukte.

### Vergleichsbeispiel 6 (nicht erfindungsgemäß)

In einem 250 ml-Dreihalskolben mit Heizmantel, Thermometer, mechanischem Rührer und Rückflusskühler wurden 41,0 g Paraformaldehyd und 138,1 g DEPI vorgelegt. Die erhaltene Reaktionsmischung wurde in 40 min auf 85°C erwärmt und dann 3 h bei 85°C gerührt. Eine ³¹P-NMR-Analyse einer Probe der Reaktionsmischung zu dieser Zeit wies einen Gehalt von 41,9 mol-% restlichem DEPI aus. Die Reaktionsmischung wurde weitere 2 h bei 85°C gerührt und enthielt dann laut ³¹P-NMR noch 12,9 mol-% restliches DEPI. Es wurden weitere 4 h bei 85°C gerührt, dann wurde nach Abkühlen und Filtrieren die Zusammensetzung des Rohproduktes mittels ³¹P-NMR bestimmt: 35,6 mol-% DEHMP, 3,8 mol-% DEPI, 60,7 mol-% unbekannte Nebenprodukte.

### Beispiel 1

In einem 250 ml-Vierhalskolben mit Heizmantel, Thermometer, mechanischem Rührer und Rückflusskühler wurden 63 ml Ethanol, 1,55 g (0,015 mol, 2,5 mol-% bzgl. DEPI) Natriumcarbonat, 19,0 g Paraformaldehyd und 80,0 g (0,58 mol) DEPI bei 35°C miteinander vermischt. Die erhaltene Reaktionsmischung wurde 2 h bei 35°C und 4 h bei 60°C gerührt. Nach dem Abkühlen und Filtrieren wurde eine Probe der Reaktionsmischung gezogen und die Zusammensetzung der phosphorhaltigen Bestandteile mittels ³¹P-NMR bestimmt: 92,2 mol-% DEHMP, 0,4 mol-% DEPI, 7,4 mol-% unbekannte Nebenprodukte.

### Beispiel 2

In einem 2000 ml-Vierhalskolben mit Heizmantel, Thermometer, mechanischem Rührer, Tropftrichter und Rückflusskühler wurden 316 ml Ethanol, 7,75 g (0,073 mol, 2,5 mol-% bzgl. DEPI) Natriumcarbonat und 95,0 g Paraformaldehyd vorgelegt und auf 35°C erwärmt. Innerhalb von 2 h wurden bei 35°C aus dem Tropftrichter 400,0 g (2,90 mol) DEPI zugetropft. Die erhaltene Reaktionsmischung wurde auf 60°C erhitzt und 4 h bei 60°C gerührt. Nach dem Abkühlen und Filtrieren wurde eine Probe der Reaktionsmischung gezogen und die Zusammensetzung der phosphorhaltigen Bestandteile mittels ³¹P-NMR bestimmt: 91,4 mol-% DEHMP, 0,6 mol-% DEPI, 8,0 mol-% unbekannte Nebenprodukte.

Die Reaktionsmischung wurde mittels eines Rotationsverdampfers bei 60°C und 10 mbar von flüchtigen Bestandteilen befreit. Es wurden 480,4 g einer farblosen, klaren Flüssigkeit erhalten. Zusammensetzung der phosphorhaltigen Bestandteile laut ³¹P-NMR: 91,1 mol-% DEHMP, 0,2 mol-% DEPI, 8,7 mol-% unbekannte Nebenprodukte.

### Beispiel 3

In einem 250 ml-Vierhalskolben mit Heizmantel, Thermometer, mechanischem Rührer, Tropftrichter und Rückflusskühler wurden 63 ml Ethanol, 1,55 g (0,015 mol, 2,5 mol-% bzgl. DEPI) Natriumcarbonat und 19,0 g Paraformaldehyd vorgelegt und auf 60°C erwärmt. Innerhalb von 2 h wurden bei 60°C aus dem Tropftrichter 80,0 g (0,58 mol) DEPI zugetropft. Die erhaltene Reaktionsmischung wurde 4 h bei 60°C gerührt. Nach dem Abkühlen und Filtrieren wurde eine Probe der Reaktionsmischung gezogen und die Zusammensetzung der phosphorhaltigen Bestandteile mittels ³¹P-NMR bestimmt: 92,1 mol-% DEHMP, 0,5 mol-% DEPI, 7,4 mol-% unbekannte Nebenprodukte.

### Beispiel 4

In einem 250 ml-Vierhalskolben mit Heizmantel, Thermometer, mechanischem Rührer, Tropftrichter und Rückflusskühler wurden 35 ml Ethanol, 1,55 g (0,015 mol, 2,5 mol-% bzgl. DEPI) Natriumcarbonat und 19,0 g Paraformaldehyd vorgelegt und auf 60°C erwärmt. Innerhalb von 2 h wurden bei 60°C aus dem Tropftrichter 80,0 g (0,58 mol) DEPI zugetropft. Die erhaltene Reaktionsmischung wurde 4 h bei 60°C gerührt. Nach dem Abkühlen und Filtrieren wurde eine Probe der Reaktionsmischung gezogen und die Zusammensetzung der phosphorhaltigen Bestandteile mittels ³¹P-NMR bestimmt: 92,2 mol-% DEHMP, 0,0 mol-% DEPI, 7,8 mol-% unbekannte Nebenprodukte.

### Beispiel 5

Wie in Beispiel 3 wurde eine Reaktionsmischung hergestellt, jedoch betrug die Menge des eingesetzten Natriumcarbonats 1,85 g (0,017 mol, 3,0 mol-% bzgl. DEPI). Zusammensetzung der phosphorhaltigen Bestandteile laut ³¹P-NMR: 91,9 mol-% DEHMP, 0,0 mol-% DEPI, 8,1 mol-% unbekannte Nebenprodukte.

### Beispiel 6

In einem 250 ml-Vierhalskolben mit Heizmantel, Thermometer, mechanischem Rührer, Tropftrichter und Rückflusskühler wurden 63 ml einer Mischung aus 96 Gew.-% Ethanol und 4 Gew.-% Wasser, 1,85 g (0,017 mol, 3,0 mol-% bzgl. DEPI) Natriumcarbonat und 19,0 g Paraformaldehyd vorgelegt und auf 60°C erwärmt. Innerhalb von 2 h wurden bei 60°C aus dem Tropftrichter 80,0 g (0,58 mol) DEPI zugetropft. Die erhaltene Reaktionsmischung wurde 4 h bei 60°C gerührt. Nach dem Abkühlen und Filtrieren wurde eine Probe der Reaktionsmischung gezogen und die Zusammensetzung der phosphorhaltigen Bestandteile mittels ³¹P-NMR bestimmt: 89,6 mol-% DEHMP, 3,0 mol-% DEPI, 7,4 % unbekannte Nebenprodukte.

### Beispiel 7

In einem 1000 ml-Planschliff-Glasreaktor, dessen Glasmantel über einen Thermostaten beheizbar war und der mit Thermometer, mechanischem Rührer, Tropftrichter und Rückflusskühler ausgestattet war, wurden 461 ml Ethanol, 5,86 g (0,055 mol, 2,4 mol-% bzgl. DEPI) Natriumcarbonat und 74,8 g Paraformaldehyd vorgelegt und auf 60°C erwärmt. Aus dem Tropftrichter wurden innerhalb von 2 h bei 60°C 323,5 g (2,43 mol) DEPI zugetropft. Die erhaltene Reaktionsmischung wurde 4 h bei 60°C gerührt. Nach dem Abkühlen und Filtrieren wurde eine Probe der Reaktionsmischung gezogen und die Zusammensetzung der phosphorhaltigen Bestandteile mittels ³¹P-NMR bestimmt: 91,1 mol-% DEHMP, 0,9 mol-% DEPI, 8,0 mol-% unbekannte Nebenprodukte.

### Beispiel 8

In einem 250 ml-Vierhalskolben mit Heizmantel, Thermometer, mechanischem Rührer, Tropftrichter und Rückflusskühler wurden 25 g Toluol, 25 g Ethanol, 1,55 g (0,015 mol, 2,5 mol-% bzgl. DEPI) Natriumcarbonat und 19,0 g Paraformaldehyd vorgelegt und auf 35°C erwärmt. Innerhalb von 2 h wurden bei 35°C aus dem Tropftrichter 80,0 g (0,58 mol) DEPI zugetropft. Die erhaltene Reaktionsmischung wurde 2 h bei 35°C und 4 h bei 60°C gerührt. Nach dem Abkühlen und Filtrieren wurde eine Probe der Reaktionsmischung gezogen und die Zusammensetzung der phosphorhaltigen Bestandteile mittels ³¹P-NMR bestimmt: 90,3 mol-% DEHMP, 0,0 mol-% DEPI, 9,7 mol-% unbekannte Nebenprodukte.

Somit zeigte sich, dass bei Vergleichsbeispiel 1 (Verwendung von Kaliumcarbonat gemäß der Synthesemethode aus CN 103073747 A1) eine erhebliche Menge nicht umgesetztes DEPI zurückblieb. Zudem reduzierten Nebenreaktionen die Ausbeute an DEHMP auf 82 %. Die Verwendung von weniger Kaliumcarbonat in Vergleichsbeispiel 2 führt zwar zu etwas weniger Nebenprodukten, liefert aber noch weniger DEPI-Umsatz. Die Vergleichsbeispiele 3 bis 5 zeigen, dass die Verwendung der anorganischen Basen Lithiumcarbonat, Calciumoxid und Calciumhydroxid keine Verbesserung bewirkt. Vergleichsbeispiel 6 zeigt, dass die gewünschte Reaktion ohne zugesetzten, basischen Katalysator sehr schleppend verläuft und nur eine geringe Ausbeute am Zielprodukt liefert.

In den erfindungsgemäßen Beispielen 1 bis 8 hingegen wurde unter den Reaktionsbedingungen wie in Vergleichsbeispiel 3 nur ein minimaler Anteil oder gar kein nicht umgesetztes DEPI gefunden, und die DEHMP-Ausbeute liegt bei 90 % oder höher.

## Patentansprüche

1. Verfahren zur Herstellung von Diethylhydroxymethylphosphonat durch Umsetzung von Diethylphosphit mit Paraformaldehyd, **dadurch gekennzeichnet, dass** die Umsetzung in Gegenwart von Natriumcarbonat in einer Menge von 1 bis 3 mol-% bezogen auf die eingesetzte Menge DEPI durchgeführt wird.

2. Verfahren gemäß Anspruch 1, **dadurch gekennzeichnet, dass** die Umsetzung in Gegenwart von Natriumcarbonat in einer Menge von 2 bis 3 mol-% bezogen auf die eingesetzte Menge DEPI durchgeführt wird.

3. Verfahren gemäß einem oder mehreren der Ansprüche 1 und 2, **dadurch gekennzeichnet, dass** es in Gegenwart eines organischen Lösungsmittels, vorzugsweise eines organischen Lösungsmittels mit einen Wassergehalt von weniger als 5 Gew.-%, bevorzugt von weniger als 1 Gew.-% und besonders bevorzugt weniger als 0,2 Gew.-% durchgeführt wird.

4. Verfahren gemäß Anspruch 3, **dadurch gekennzeichnet, dass** das organische Lösungsmittel ausgewählt wird aus der Gruppe bestehend aus Methanol, Ethanol, n-Propanol, Isopropanol, n-Butanol, sec-Butanol, Isobutanol, tert.-Butanol, Diethylhydroxymethylphosphonat, Toluol, Xylol, Cyclohexan, n-Heptan, Dichlormethan, n-Butylchlorid, Diethylether, Methyl-tert.-butylether, Ethylacetat, n-Butylacetat, Triethylphosphat und Mischungen dieser Stoffe.

5. Verfahren gemäß einem oder mehreren der Ansprüche 3und 4, **dadurch gekennzeichnet, dass** als organisches Lösungsmittel Ethanol eingesetzt wird.

6. Verfahren gemäß einem oder mehreren der Ansprüche 1 bis 5, **dadurch gekennzeichnet, dass** es sich bei dem Natriumcarbonat um wasserfreies Natriumcarbonat (CAS Nr. 497-19-8) handelt.

7. Verfahren gemäß einem oder mehreren der Ansprüche 1 bis 6, **dadurch gekennzeichnet, dass** es bei einer Reaktionstemperatur von 5 bis 75°C, bevorzugt von 15 bis 65°C und besonders bevorzugt von 25 bis 55°C durchgeführt wird.

8. Verfahren gemäß einem oder mehreren der Ansprüche 1 bis 7, **dadurch gekennzeichnet, dass** Paraformaldehyd und gegebenenfalls das organische Lösungsmittel in einem Reaktor vorgelegt und anschließend Diethylphosphit dazu dosiert wird.

9. Verfahren gemäß einem oder mehreren der Ansprüche 1 bis 7, **dadurch gekennzeichnet, dass** Paraformaldehyd, Natriumcarbonat und gegebenenfalls das organische Lösungsmittel in einem Reaktor vorgelegt und anschließend Diethylphosphit dazu dosiert wird.

10. Verfahren gemäß einem oder mehreren der Ansprüche 1 bis 9, **dadurch gekennzeichnet, dass** im Anschluss an die Umsetzung das Lösungsmittel ganz oder teilweise durch Destillation abgetrennt wird.

11. Verfahren gemäß einem oder mehreren der Ansprüche 1 bis 10, **dadurch gekennzeichnet, dass** die Reaktion durchgeführt wird, bis 90% oder mehr - bestimmt mittels ³¹P-NMR-Spektroskopie - des eingesetzten Diethylphosphits in Diethylhydroxymethylphosphonat umgewandelt wurden.

12. Verfahren gemäß einem oder mehreren der Ansprüche 1 bis 11, **dadurch gekennzeichnet, dass** die Reaktion durchgeführt wird, bis der Restgehalt an Diethylphosphit in der Reaktionsmischung - bestimmt mittels ³¹P-NMR-Spektroskopie - weniger als 2%, vorzugsweise weniger als 1% beträgt.

13. Verfahren gemäß einem oder mehreren der Ansprüche 1 bis 12, **dadurch gekennzeichnet, dass** im Anschluss an die Umsetzung keine Reinigung durch Zugabe von Wasser und Extraktion des Diethylhydroxymethylphosphonats mit einem organischen Lösungsmittel aus der wässrigen Phase erfolgt.

14. Zusammensetzung erhältlich durch Reaktion von Diethylphosphit mit Paraformaldehyd und Natriumcarbonat gemäß einem oder mehreren der Ansprüche 1 bis 13, **dadurch gekennzeichnet, dass** die phosphorhaltigen Bestandteile der Zusammensetzung zu mindestens 90 mol-% aus Diethylhydroxymethylphosphonat und zu weniger als 2%, vorzugsweise weniger als 1% aus Diethylphosphit bestehen.

15. Verwendung von Zusammensetzungen gemäß Anspruch 14 als Flammschutzadditiv in Kunststoffen, welches bereits vor oder während der Polymerisation zugegeben wird.
